# FASCICULE DE BREVET EUROPEEN

(11) **EP 2 961 706 B1**
(45) Date de publication et mention de la délivrance du brevet: **15.07.2020**
(21) Numéro de dépôt: 14707174.0
(22) Date de dépôt: 28.02.2014
(51) Int. Cl.: C03C 3/062, C03C 3/066, C03C 10/00, C03C 3/089, C03C 4/10, C03C 3/253

(54) **VERRES ET VITROCÉRAMIQUES NANOSTRUCTURES TRANSPARENTS DANS LE VISIBLE ET L'INFRAROUGE**
IN SICHTBAREN UND INFAROT-BEREICHEN TRANSPARENTE NANOSTRUKTURIERTE LINSEN UND VITROKERAMIK
NANOSTRUCTURED LENSES AND VITROCERAMICS THAT ARE TRANSPARENT IN VISIBLE AND INFRARED RANGES

(30) Priorité: 28.02.2013 FR 1351795
(43) Date de publication de la demande: 06.01.2016
(73) Titulaire: Centre National de la Recherche Scientifique (C.N.R.S.), 75016 Paris (FR)
(72) Inventeur: CHENU, Sébastien, F-45160 Olivet (FR); ALLIX, Mathieu, F-45160 Olivet (FR); MATZEN, Guy, F-45560 Saint Denis En Val (FR); VERON, Emmanuel, F-45650 Saint Jean Le Blanc (FR); CARDINAL, Thierry, F-33770 Salles (FR)
(74) Mandataire: Novagraaf Technologies
(86) Numéro de dépôt international: PCT/EP2014/053932
(87) Numéro de publication internationale: WO 2014/131881

(56) Documents cités:
- WO-A1-2008/075546
- CN-A- 1 587 142
- MURTHY M K ET AL: "PROPERTIES AND STRUCTURE OF GLASSES IN THE SYSTEM M2O-GA2O3-GEO2 (M = LI, NA, K)", PHYSICS AND CHEMISTRY OF GLASSES, SOCIETY OF GLASS TECHNOLOGY, SHEFFIELD, GB, vol. 8, no. 1, 1 février 1967 (1967-02-01) , pages 26-29, XP001216308, ISSN: 0031-9090 cité dans la demande
- LIPINSKA-KALITA K E ET AL: "Spectroscopic properties of Cr<3+> ions in nanocrystalline glass-ceramic composites", JOURNAL OF NON-CRYSTALLINE SOLIDS, NORTH-HOLLAND PHYSICS PUBLISHING. AMSTERDAM, NL, vol. 352, no. 6-7, 15 mai 2006 (2006-05-15), pages 524-527, XP028046492, ISSN: 0022-3093, DOI: 10.1016/J.JNONCRYSOL.2005.11.039 [extrait le 2006-05-15] cité dans la demande
- SIGAEV V N ET AL: "Nickel-assisted growth and selective doping of spinel-like gallium oxide nanocrystals in germano-silicate glasses for infrared broadband light emission;Nickel-assisted growth and selective doping of spinel-like gallium oxide nanocrystals in germano-silicate glasses for infrared broadband light emiss", NANOTECHNOLOGY, IOP, BRISTOL, GB, vol. 23, no. 1, 8 décembre 2011 (2011-12-08), page 15708, XP020216657, ISSN: 0957-4484, DOI: 10.1088/0957-4484/23/1/015708

## Description

La présente invention concerne de nouvelles compositions de verres et de vitrocéramiques nanostructurés, transparents ou translucides, leur procédé de fabrication et leurs utilisations.

Les applications en optique exigent l'utilisation de vitrocéramiques ou verres transparents ou au moins translucides. Les longueurs d'onde d'intérêt sont celles du spectre de la lumière visible, c'est-à-dire comprises entre 400 nm et 800 nm, et le domaine infrarouge entre 800 et 8000 nm.

Des compositions de matériaux nanostructurés transparents ou translucides ont été décrites, cependant celles-ci correspondent essentiellement à des céramiques polycristallines issues de précurseurs nanométriques et des vitrocéramiques.

Les procédés de fabrication des céramiques polycristallines font en général intervenir des précurseurs sous forme de particules nanométriques, relativement coûteuses du fait de leur synthèse complexe, comme l'illustrent les travaux de Krell et al (Transparent compact ceramics: Inherent physical issues. Optical Materials 2009, 31 (8), 1144-1150). Les particules subissent une étape de pressage, puis une étape de frittage à une température souvent supérieure à 1500°C, et typiquement sous forte pression. Lors de cette étape de frittage a lieu la croissance des cristaux. Il est par ailleurs à noter que les précurseurs de ces céramiques présentent un réel danger pour la santé.

Ces céramiques polycristallines transparentes, issues de précurseurs nanométriques, sont très adaptées pour des applications optiques à haute performance, mais ont un coût de fabrication bien trop élevé pour des applications plus usuelles, par exemple pour l'affichage, l'éclairage ou l'imagerie médicale.

Il existe donc un besoin de nouveaux verres et vitrocéramiques transparents ou translucides à la fois dans le domaine visible et infrarouge jusqu'à 8 µm (longueur d'onde comprise entre 400 nm et 8 µm), qui allient la possibilité d'ajuster leurs propriétés optiques, à un procédé de fabrication relativement peu coûteux, par exemple de type verrier.

Des vitrocéramiques transparentes ou translucides à base de germanates et/ou de silicates, obtenues par un procédé verrier, mais contenant du fluor (fluorures et oxyfluorures) ou des chalcogénures (en particulier les sulfures), ont été décrites dans l'art antérieur, et notamment dans les articles De Pablos-Martín, et al. (2012). International Materials Reviews 57(3): 165-186 et Zhang et al Journal of Non-Crystalline Solids, 2004, 337, 130-135. Celles-ci montrent une bonne transparence dans le visible et l'infrarouge, mais possèdent une faible stabilité chimique. En outre, le fluor, très volatil à haute température, est hautement corrosif et toxique, ce qui nécessite l'utilisation d'installations industrielles sécurisées coûteuses.

Des verres et vitrocéramiques transparents ou translucides à base de germanates et/ou de silicates, obtenus par un procédé verrier, mais contenant de l'oxyde de baryum (BaO, voir US 2005/0159289), des aluminates (Al₂O₃, voir US 2003/0013593 et WO 01/28943), de l'oxyde de lithium (Sigaev et al, Nanotechnology 23 (2012) 01708 7pp) ou riches en oxyde de sodium (teneur supérieure à 8% molaire en Na₂O, voir Zhou et al Adv. Funct. Mater. 2009, 19, 2081-2088) ont également été décrits.

Bayya et al (US 5,786,287) ont divulgué des vitrocéramiques riches en Y₂O₃, La₂O₃ ou Gd₂O₃. Ainsi, dans ces vitrocéramiques, Y₂O₃, La₂O₃ ou Gd₂O₃ ne peuvent être considérés comme de simples dopants. Il est à noter que les vitrocéramiques selon Bayya et al sont transparentes uniquement dans le domaine infrarouge (longueur d'onde comprise entre 2 et 5µm), mais pas dans le visible, et présentent un très fort taux de cristallisation (supérieur à 80% en volume). En outre, les verres décrits ne présentent pas de nanostructuration.

Par ailleurs, Duan et al (Applied Physics Letters 2006, 89, 183119, et Journal of Non-Crystalline Solids 2008, 354, 4695-4697) et Yu et al (Journal of Physics and Chemistry of Solids 2010, 71, 1656-1659 et Physica B 2011, 406, 3101-3103) décrivent des vitrocéramiques nanocristallines très riches en SiO₂. Ces vitrocéramiques sont obtenues par traitement thermique d'un solide obtenu par voie sol-gel. Ainsi, ces vitrocéramiques ne sont pas obtenues selon un procédé verrier, puisque le solide intermédiaire n'est pas un verre, mais un gel séché. En outre, ces compositions de vitrocéramiques comprennent 89% et 90% molaire de SiO₂. Les matériaux élaborés avec le procédé selon Duan et al ou Yu et al, ne correspondent qu'à une gamme restreinte de vitrocéramiques, et donc de propriétés optiques. On pourra également citer les vitrocéramiques riches en SiO₂ (teneur supérieure à 60%) de Lipinska-Kalita et al (J. Non-Crytalline Solides 352 (2006) 524-527).

Murthy et al (Physics and Chemistry of Glasses vol 8, no 1 Feb 1967) divulgue des verres ternaires de formule M₂O-Ga₂O₃-GeO₂, où M représente un métal alcalin choisi parmi Li, Na ou K. Dans cet article, les auteurs effectuent une étude visant à définir les domaines de composition vitrifiable. Au-delà de ces domaines, le mélange ternaire étudié cristallise au moins partiellement, conduisant ainsi à l'apparition par endroits de cristaux. On notera toutefois que la taille des cristaux n'est pas divulguée, pas plus que leur concentration massique dans la matrice vitreuse.

La demande internationale WO2008/075546 a trait à des verres pour capteurs, lesdits verres ayant une transmittance d'au moins 50% à une longueur d'onde de 5.5 µm, et d'au plus 10% à une longueur d'onde de 7.0 µm. Les verres selon WO2008/075546 agissent donc comme des filtres pour certaines longueur d'ondes. Les compositions de verre selon WO2008/075546 comprennent, en moles: de 10 à 50% de Bi₂O₃ ; de 20 à 85% de GeO₂ ; de 0 à 19% de Ga₂O₃ ; et de 0 à 15% en Al₂O₃.

La demande de brevet chinois CN1587142 concerne des verres de type germanate dopés au bismuth de composition molaire comprenant : de 90 à 99.98 % de GeO₂; de 0.01 à 5 mol% de Bi₂O₃ ; et de 0.01 à 9 mol% de M, M étant choisi parmi Al₂O₃, Ta₂O₅, Ga₂O₃ et B₂O₃. Les verres obtenus selon CN1587142 sont colorés (du rose chair au rouge violet ou rouge brun) en raison de leur forte teneur en Bi₂O₃. Ils sont également fluorescents.

Or, ni l'article de Murthy et al, ni les demandes WO2008/075546 ou CN1587142 ne divulguent de verres nanostructurés tels que les verres de la présente invention, dans lesquels on obtient une nanostructuration par démixtion de galates (phases riches en gallium). En outre, comme souligné, ces documents ne concernent en aucun cas des vitrocéramiques. En particulier, Murthy et al ne divulguent pas de vitrocéramique dans la mesure où le verre comprenant les cristaux n'a pas subi de traitement thermique subséquent, qui permet notamment de renforcer les propriétés mécaniques et thermiques du matériau. En outre, Murthy et al ne divulguent pas de vitrocéramique nanostructurée.

Contrairement aux matériaux de l'art antérieur, le demandeur a trouvé de manière surprenante de nouveaux verres et vitrocéramiques nanostructurés et transparents (ou au moins translucides) à base de gallium et de silice et/ou de germanate.

Les vitrocéramiques aussi bien que les verres selon la présente invention sont nanostructurés. La nanostructuration des vitrocéramiques correspond à la présence de cristaux de tailles nanométriques dans la matrice vitreuse. La nanostructuration des verres provient d'une démixtion ou séparation de phase. Ainsi, des images de microscopie électronique en transmission font apparaître des domaines de taille nanométrique (phase 1), inclus dans une matrice (phase 2). En fonction de la composition du verre, la séparation de phase est de type nucléation-croissance ou spinodale. Dans le cas d'une phase nucléation-croissance, les nanodomaines sont de forme sphérique, tandis que dans le cas d'une séparation de phase de type spinodale, les nanodomaines sont enchevêtrés dans la matrice.

Les domaines de taille nanométriques (vitreux dans le cas des verres nanostructurés ou correspondant aux nanocristaux dans le cas des vitrocéramiques) sont homogènes en composition et en taille, et leur répartition est uniforme au sein de la matrice vitreuse.

La taille, la forme et la proportion des domaines nanostructurés des verres et des cristaux nanométriques des vitrocéramiques sont contrôlables via la composition nominale, et dans une moindre mesure par le procédé d'élaboration du verre.

Ces domaines de taille nanométrique sont obtenus par démixtion d'une phase riche en gallium, cet élément se concentrant dans ces domaines nanométriques. Au contraire, la concentration résiduelle du gallium dans la matrice vitreuse est très faible. C'est en contrôlant cette démixtion des galates qu'on maîtrise la nanostructuration (dimensions et formes des nanodomaines) des verres et vitrocéramiques, et donc leur transparence.

En outre, les vitrocéramiques selon l'invention peuvent être facilement obtenues à l'aide d'un procédé verrier peu coûteux.

Contrairement à l'art antérieur, il est également à noter que les verres et vitrocéramiques selon l'invention présentent une teneur sensiblement nulle en BaO, en aluminate (Al₂O₃), ou en oxyde de lithium (Li₂O), et une teneur inférieure ou égale à 7% molaire en Na₂O. Par ailleurs les compositions selon la présente invention ne contiennent ni fluorures ni chalcogénures. De plus, selon la présente invention, elles peuvent contenir des dopants, en particulier des terres rares et éléments de transition, avec une teneur inférieure à 3% molaire des compositions, préférentiellement inférieure à 1%. En effet, l'introduction de ces éléments en quantité trop importante engendre une perte des propriétés de transparence des vitrocéramiques selon l'invention.

Par « verre », on entend au sens de la présente invention un solide inorganique amorphe, présentant le phénomène de transition vitreuse. Un verre est obtenu par refroidissement à partir d'une phase liquide, il n'est donc pas obtenu sous forme de poudre. Ainsi, le verre selon l'invention n'est pas obtenu par un procédé sol-gel.

Par « vitrocéramique », on entend au sens de la présente invention un matériau inorganique constitué d'une matrice vitreuse (phase amorphe) et de cristaux, de préférence de taille nanométrique, avec un taux de cristallisation contrôlable compris entre 2% et 75%, c'est-à-dire que entre 2% et 75% en volume du matériau est cristallin. De préférence, le taux de cristallisation de la vitrocéramique est compris entre 10% et 60%. Les cristaux sont donc englobés dans une matrice de verre. Ce matériau n'est pas obtenu sous forme de poudre.

Par « taille nanométrique », on entend au sens de la présente invention une taille comprise entre 1 nm et 500 nm, de préférence entre 5 et 150 nm.

Par « transparent », on entend au sens de la présente invention que l'on peut voir à travers le matériau. Cette notion qualitative de transparence est précisée quantitativement le cas échéant par une mesure de transmission lumineuse spéculaire. Le protocole de mesure de la transmission spéculaire consiste à mesurer l'intensité lumineuse selon l'axe du rayon lumineux incident. Un matériau peut être considéré comme transparent (pour les applications en optique notamment) pour une longueur d'onde donnée lorsque sa transmission lumineuse spéculaire est supérieure ou égale à 30%.

Par « translucide » on entend au sens de la présente invention que le matériau transmet la lumière mais qu'il n'est pas possible de voir distinctement au travers du matériau. Cette notion de translucidité est précisée le cas échéant par une mesure de transmission lumineuse totale. Le protocole de mesure de la transmission totale consiste à mesurer l'intensité lumineuse (spéculaire + diffusée) selon un angle solide de 180° à une longueur d'onde donnée.

Il est entendu que les notions de transparence et de translucidité intègrent ici l'épaisseur du matériau. Typiquement, les échantillons sur lesquels ont été effectuées les mesures ont une épaisseur comprise entre 1 et 10 mm.

Dans la présente description, les termes « matériau » ou « matériaux » désignent les verres et vitrocéramiques nanostructurés transparents ou translucides de la présente invention.

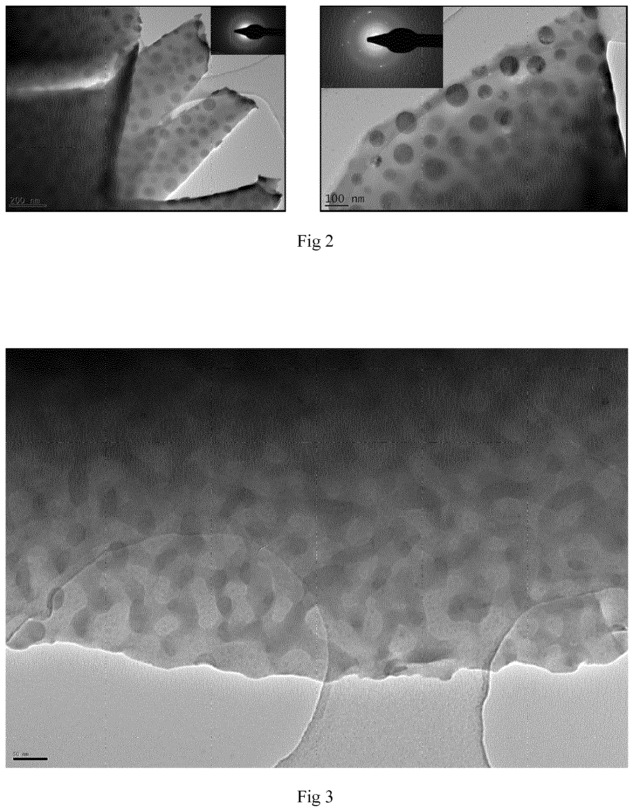

Par « démixtion » on entend au sens de la présente invention qu'une phase homogène se décompose en domaines de compositions différentes. Il existe deux types de démixtion : - la démixtion de type « nucléation-croissance », qui conduit à des domaines sphériques au sein de la matrice, comme l'illustre par exemple la figure 2.
- la démixtion de type « spinodale » qui conduit à des domaines enchevêtrés comme l'illustre par exemple la figure 3.

Les matériaux selon la présente invention sont « nanostructurés », ce qui signifie que ceux-ci présentent une texture à l'échelle nanométrique.

Par « nanostructuration » on entend au sens de la présente invention que les verres et les vitrocéramiques sont constitués de domaines de composition, obtenus typiquement par démixtion, de tailles nanométriques. Ces domaines se caractérisent par une composition différente. Dans le cas des verres, les nanodomaines (domaines de taille nanométriques) sont vitreux. Dans le cas des vitrocéramiques, les nanodomaines correspondent aux cristaux de taille nanométriques.

Par « procédé verrier » on entend au sens de la présente invention un procédé permettant d'obtenir un verre ou une vitrocéramique à partir de matières premières sous forme de poudres, lesdites poudres n'étant pas des précurseurs nanométriques. Un tel procédé verrier comprend une étape de fusion de matières premières sous forme de poudres menant à un liquide à haute température, suivi d'une étape de refroidissement dudit liquide, qui conduit à l'obtention du verre. Un procédé verrier de fabrication de vitrocéramique, comprend en outre une étape de traitement thermique de cristallisation.

Par « traitement thermique de cristallisation», on entend au sens de la présente invention un chauffage du verre permettant de le faire cristalliser de manière contrôlée.

Par « composition présentant une teneur sensiblement nulle en un composant», on entend au sens de la présente invention que la composition comprend par exemple moins de 0.1% en masse, de préférence, moins de 0.01% en masse de ce composant par rapport à la masse totale de la composition. En particulier, une composition qui présente une teneur sensiblement nulle en un composant peut comprendre ce composant à l'état de trace, mais de préférence ne le contient pas.

Dans la description de la présente invention, les nombres a, b, k, x, y et z (relatifs à la composition de référence de formule 1) représentent des proportions molaires. Partout ailleurs, à moins qu'il n'en soit indiqué autrement, les pourcentages représentent des pourcentages massiques et sont exprimés par rapport à la masse totale de l'élément de référence. Par exemple, lorsqu'il est indiqué qu'une composition ou mélange comprend 3% d'un composé donné, il est entendu que la composition ou le mélange comprend 3% en masse de ce composé par rapport à la masse totale de cette composition ou de ce mélange. En outre, il est entendu que lorsqu'on indique, dans la présente invention, qu'un de ces nombres est compris entre deux valeurs, les bornes indiquées sont incluses dans la plage de valeurs. Ainsi, par « z est compris entre 0 et 10 », on entend z est compris entre 0 et 10, 0 et 10 inclus.

Un objet de la présente invention concerne donc des verres nanostructurés transparents ou translucides à base de silice et/ou d'oxydes de germanium, et d'oxyde de gallium.

Un autre objet de la présente invention concerne des vitrocéramiques nanostructurées transparentes ou translucides à base de silice et/ou d'oxydes de germanium, et d'oxyde de gallium.

Un autre objet de la présente invention concerne un procédé de fabrication de verres nanostructurés transparents ou translucides à base de silice et/ou d'oxydes de germanium, et d'oxyde de gallium, comprenant une étape de séparation de phase (démixtion).

Un autre objet de la présente invention concerne un procédé de fabrication verrier de vitrocéramiques nanostructurées transparentes ou translucides à base de silice et/ou d'oxydes de germanium, et d'oxyde de gallium, comprenant une étape de traitement thermique de cristallisation d'un verre ayant la composition correspondante.

Un autre objet de l'invention concerne l'utilisation de vitrocéramiques nanostructurées transparentes ou translucides à base de silice et/ou d'oxydes de germanium, et d'oxyde de gallium pour la fabrication de matériaux optiques, en particulier de type luminescents (fluorescents, phosphorescents).

Un autre objet de l'invention concerne l'utilisation de verres nanostructurés transparents ou translucides à base de silice et/ou d'oxydes de germanium, et d'oxyde de gallium pour la fabrication de matériel pour l'éclairage ou pour l'affichage.

### Verre et vitrocéramique

La vitrocéramique ou le verre selon la présente invention, nanostructuré, et transparent ou translucide, **ayant une teneur sensiblement nulle en Li₂O, Al₂O₃ et BaO**, comprend au moins 97%, tel que de 97% à 100%, de préférence de 99 % à 100%, en masse, par rapport à la masse totale du matériau, d'une composition de formule I suivante :

(GeO₂)ₓ(SiO₂)_{y}(B₂O₃)_{z}(Ga₂O₃)ₐ (Oxy₁)_{b}(Oxy₂)ₖ (I)

où
Oxy₁ représente un oxyde choisi parmi ZnO, MgO, NbO_{2.5}, WO₃, NiO, SnO, TiO₂, BiO_{1.5}, AgO, CaO, MnO, ou un mélange de ceux-ci, de préférence choisi parmi ZnO, MgO, NbO_{2.5}, WO₃, NiO, SnO, AgO, CaO, MnO ou un mélange de ceux-ci, de manière encore préférée choisi parmi ZnO, MgO, AgO, BiO_{1.5} ou un mélange de ceux-ci, de manière préférée entre toutes ZnO, MgO, AgO ou un mélange de ceux-ci, et
Oxy₂ représente un oxyde choisi parmi Na₂O, K₂O ou un mélange de ceux-ci, de préférence Oxy₂ représente Na₂O, et
x est compris entre 0 et 98, et
y est compris entre 0 et 60, et
x et y ne sont pas simultanément nuls, et
z est compris entre 0 et 20, de préférence entre 0 et 10,
x+y+z est compris entre 40 et 98,
a est compris entre 1 et 50, de préférence entre 0.5 et 25,
b est compris entre 1 et 35, de préférence entre 1 et 35, et
k est compris entre 1 et 7, de préférence entre 0 et 5, et
x, y, z, a, b, et k sont tels que x + y + z + a + b + k=100.

Dans la formule (I) ci-dessus, les oxydes de germanium, silicium et bore représentent les oxydes formateurs de verre.

De préférence, la vitrocéramique ou le verre selon l'invention est caractérisé en ce que x et y sont tels que x + y ≥ 40, de préférence x + y ≥ 50.

Dans un mode de réalisation particulier, z est égal à 0.

Comme indiqué plus haut, les vitrocéramiques aussi bien que les verres selon la présente invention sont nanostructurés. La nanostructuration des vitrocéramiques correspond à la présence de cristaux de taille nanométrique dans la matrice vitreuse. La nanostructuration des verres correspond à une démixtion ou séparation de phase. Dans les matériaux selon l'invention, les domaines de taille nanométriques (verres) ou les nanocristaux (vitrocéramiques) sont homogènes en composition et en taille, et leur répartition est uniforme au sein de la matrice vitreuse.

La taille et la forme des nanodomaines ou nanocristaux sont ajustables selon la composition nominale, et dans une moindre mesure le procédé de fabrication des verres. C'est la taille nanométrique de cette structuration qui assure une transparence aussi bien aux verres qu'aux vitrocéramiques selon l'invention.

Sans vouloir être lié par la théorie, il semble que ces nanodomaines sont obtenus par démixtion d'une phase riche en gallium, cet élément se concentrant dans ces domaines nanométriques. Au contraire, la concentration résiduelle du gallium dans la matrice vitreuse est très faible. Le gallium est associé à un autre oxyde (Oxy₁) lors de sa démixtion pour former une phase riche en gallium et en Oxy₁ qu'on pourrait noter (Ga₂O₃)(Oxy₁). Dans les verres contenant de l'oxyde de zinc par exemple, on fait démixer une phase vitreuse de galate de zinc (Ga₂O₃)(ZnO) qui va cristalliser ensuite lors de l'élaboration de la vitrocéramique en nanocristaux de ZnGa₂O₄.

L'oxyde de gallium ainsi que Oxy₁ représentent ainsi les deux constituants essentiels de la phase « galate » ou nanodomaines des matériaux selon la présente invention.

Avantageusement, b est compris entre 2 et 25.

L'ajout d'oxyde alcalin Oxy₂ (oxydes alcalins) est notamment utile lorsqu'on souhaite diminuer la taille des zones démixées (nanodomaines du verre selon l'invention). Toutefois, la quantité introduite doit être inférieure à 7% molaire (c est inférieur ou égal à 7) pour éviter une perte de la nanostructuration.

Dans un mode de réalisation particulier, k est compris entre 1 et 7, de préférence entre 1 et 5.

Dans un autre mode de réalisation, k est compris entre 1 et 7, de préférence entre 1 et 5.

Dans un mode de réalisation particulier, le matériau selon l'invention comprend 100% massique d'une composition de formule I telle que définie ci-dessus.

Dans un mode de réalisation, le matériau de la présente invention comprend en complément de la composition de formule (I) des éléments additifs conventionnels en technique verrière et/ou optique. Ces éléments additifs conventionnels sont bien connus de l'homme du métier.

Par « en complément » on entend au sens de la présente invention une quantité d'éléments additifs suffisante pour atteindre les 100% en masse pour le matériau de référence. Ainsi le matériau de la présente invention peut comprendre jusqu'à 3 % (de 0 à 3%), ou jusqu'à 1% (de 0 à 1%), en masse d'éléments additifs conventionnels par rapport à la masse totale du matériau.

On peut notamment citer comme exemple d'additifs conventionnels le carbone ou le sulfate de sodium, utilisés afin d'améliorer l'affinage à l'échelle industrielle.

Les dopants sont typiquement utilisés pour faire varier les propriétés optiques des verres et vitrocéramiques. Par exemple, il est connu qu'un dopage par des éléments appartenant au groupe des éléments de transition ou des terres rares, permet de choisir le domaine spectral d'émission. L'élément dopant, sa concentration et son degré d'oxydation sont choisis en fonction de la composition de la matrice hôte et des propriétés optiques recherchées pour le matériau. Les dopants peuvent être choisis parmi les éléments de transition (par exemple Cr, Mn, Fe, Co, Ni, Ti, W, etc) Ils peuvent également être choisis parmi les terres rares, de préférence les lanthanides. Encore plus avantageusement, les dopants sont choisis parmi le scandium, l'yttrium, le lanthane, le cérium, le praséodyme, le néodyme, le samarium, l'europium, le gadolinium, le terbium, le dysprosium, l'holmium, l'erbium, le thulium, l'ytterbium, le lutétium et leurs mélanges. L'europium, le cérium, l'erbium, le nickel et le manganèse sont préférés, mais l'homme de l'art peut être amené à réaliser un co-dopage avec plusieurs terres rares et/ou éléments de transition en fonction des propriétés optiques visées.

Quand ils sont présents, les dopants peuvent représenter jusqu'à 3% massique, de préférence jusqu'à 1% massique de la composition totale du matériau. Ainsi, le matériau comprend typiquement moins de 3% en masse, ou moins 1% en masse, de dopants.

Les matériaux de la présente invention sont transparents, ou tout au moins translucides. Cette caractéristique est nécessaire pour permettre l'emploi des matériaux de la présente invention en optique. Les matériaux réfractaires, ciments, mortiers qui seraient préparés à partir des mêmes matières premières que les matériaux de la présente invention ne sont pas transparents. En outre, ces matériaux ne sont pas obtenus par un procédé verrier.

Les vitrocéramiques de la présente invention se distinguent des matériaux obtenus par frittage par leur densité : la densité des vitrocéramiques de la présente invention est sensiblement la densité théorique (absence de porosité). Par densité théorique, on entend la densité calculée à partir des données cristallographiques (structure et paramètres de maille) en l'absence de porosité. L'utilisation d'un procédé verrier permet d'obtenir un matériau de densité sensiblement théorique, c'est-à-dire qu'on observe l'absence de porosité. Au contraire, les matériaux obtenus par frittage (incluant un pressage) nécessitent des traitements complexes et coûteux pour réduire la porosité résiduelle qui limite la transparence. Par absence de porosité, on entend au sens de la présente invention que la porosité du matériau est inférieure à 0.5%. En effet, lorsque la porosité devient trop importante (typiquement supérieure à 0.5%), le matériau perd sa transparence.

Ainsi, la préparation des vitrocéramiques et verres de la présente invention par un procédé verrier associé au choix des compositions de formule (I) confère à ces matériaux des propriétés remarquables : une bonne transparence liée au procédé (absence de porosité) et aux compositions des matériaux, de bonnes propriétés optiques ajustables en fonction de la composition choisie, de la taille des domaines nanostructurés et de la présence et du choix des dopants, la possibilité d'obtenir des formes variées et des dimensions importantes grâce au procédé (coulée dans un moule), enfin un coût beaucoup plus faible que les matériaux optiques de compositions analogues grâce à un procédé peu coûteux.

### Modes de réalisation particuliers des verres et vitrocéramiques

### Germanates

Dans un mode de réalisation particulier, y est égal à 0. Pour simplifier, les compositions selon ce mode de réalisation seront appelées des germanates.

Avantageusement, x est alors compris entre 50 et 98, de préférence entre 60 et 98.

De préférence, dans ce mode de réalisation, z est égal à 0.

Avantageusement, a est compris entre 1 et 15. Dans un mode de réalisation particulier, k est compris entre 1 et 3.

Par exemple, des verres et vitrocéramiques ont été obtenus, présentant une composition choisie parmi les compositions de formule (*n'étant pas selon l'invention):
* 98GeO₂ - 0,75Ga₂O₃ - 1,25ZnO, 78.04GeO₂-9.76ZnO-9.76Ga₂O₃ - 2.44Na₂O 60GeO₂-3Na₂O- 13,9Ga₂O₃ -23,1ZnO,
* 90GeO₂- 3,75Ga₂O₃ - 6,25AgO,
* 84GeO₂ - 6Ga₂O₃ - 10ZnO, 60GeO₂-3Na₂O- 13,9Ga₂O₃ -23,1MgO,
* 92GeO₂- 2Ga₂O₃ - 6Bi₂O₃, 87GeO₂- 1K₂O- 3Ga₂O₃ - 9WO₃,
* 90GeO₂- 3,75Ga₂O₃ - 6,25ZnO,
* 90GeO₂- 3,75Ga₂O₃ - 6,25Bi₂O₃, et
* 88GeO₂- 5,4Ga₂O₃ - 6,6AgO.

### Silicates

Dans un mode de réalisation particulier, x est égal à 0. Pour simplifier, les compositions selon ce mode de réalisation seront dénommées silicates.

Avantageusement, y est alors compris entre 40 et 60, de préférence entre 43 et 55. Entre outre, z est avantageusement compris entre 0 et 10, et de préférence est égal à 0.

Avantageusement, a est compris entre 10 et 30, encore plus avantageusement entre 20 et 25.

De préférence, b est compris entre 10 et 35, encore plus préférentiellement entre 14 et 25.

Avantageusement, k est compris entre 3 et 6.

Des verres et vitrocéramiques ont été obtenus, présentant une composition choisie parmi les compositions de formule :

55SiO₂ - 5Na₂O - 23Ga₂O₃ - 17ZnO,

44SiO₂ - 6Na₂O - 25Ga₂O₃ - 25MgO,

60SiO₂ - 5Na₂O - 1K₂O - 20Ga₂O₃ - 10ZnO-4Nb₂O₅,

et

55SiO₂ - 5Na₂O - 20Ga₂O₃ - 20ZnO.

### Silicogermanates

Dans un mode de réalisation particulier, x et y sont tous deux différents de 0. Pour simplifier, les compositions selon ce mode de réalisation seront appelées des silicogermanates.

Avantageusement, x et y sont chacun indépendamment compris entre 10 et 80, de préférence entre 30 et 70.

De préférence, dans ce mode de réalisation, x et y sont tels que x+y est compris entre 50 et 95, encore plus préférentiellement entre 60 et 98, encore plus préférentiellement entre 80 et 95.

Entre outre, z est avantageusement compris entre 0 et 10. Dans un mode de réalisation particulier, z est égal à 0. Dans un autre mode de réalisation particulier, z est égal à 10.

Avantageusement, a est compris entre 1 et 5.

De préférence, b est compris entre 1 et 5, encore plus préférentiellement entre 4 et 5.

Dans un mode de réalisation particulier, k est compris entre 1 et 3.

En particulier, des verres et vitrocéramiques ont été obtenus, présentant une composition choisie parmi les compositions de formule (*n'étant pas selon l'invention)
* 42GeO₂ - 50SiO₂ - 3Ga₂O₃ - 5ZnO, 70GeO₂ - 10SiO₂ - 2Na₂O - 4Ga₂O₃ - 4Bi₂O₃, et
* 50GeO₂ - 30SiO₂ - 10B₂O₃ - 5Ga₂O₃ - 5ZnO.

### Procédé de fabrication des verres et vitrocéramiques selon l'invention

La présente invention concerne également un procédé de fabrication d'un verre transparent selon l'invention.

Le verre est préparé par fusion des matières premières (oxydes de départ, ou le cas échéant de leurs précurseurs) entrant dans sa composition conduisant à un liquide, suivi d'une solidification de ce liquide par refroidissement. La démixtion du verre a lieu lors de l'étape de formation du liquide ou de refroidissement. Ces étapes permettent donc d'introduire la nanostructuration.

Le procédé de fabrication d'un verre nanostructuré selon l'invention comprend les étapes successives de :
1 - fusion des oxydes de départ, ou le cas échéant de leurs précurseurs, présents sous forme de poudre, à une température comprise entre 900°C et 1700°C ;
2 - refroidissement,
menant à un verre transparent ou translucide nanostructuré ayant une teneur sensiblement nulle en Li₂O, **Al₂O₃ et BaO, et** comprenant au moins 97%, tel que de 97% à 100%, de préférence de 99 % à 100%, en masse, par rapport à la masse totale du verre, d'une composition de formule I suivante :

(GeO₂)ₓ(SiO₂)_{y}(B₂O₃)_{z}(Ga₂O₃)ₐ (Oxy₁)_{b}(Oxy₂)ₖ (I)

où
Oxy₁ représente un oxyde choisi parmi ZnO, MgO, NbO_{2.5}, WO₃, NiO, SnO, TiO₂, BiO_{1.5}, AgO, CaO, MnO, ou un mélange de ceux-ci, de préférence choisi parmi ZnO, MgO, NbO_{2.5}, WO₃, NiO, SnO, AgO, CaO, MnO, ou un mélange de ceux-ci, de manière encore préférée choisi parmi ZnO, MgO, AgO, BiO_{1.5}, NbO_{2.5} ou un mélange de ceux-ci, de manière préférée entre toutes choisi parmi ZnO, MgO, AgO, NbO_{2.5} ou un mélange de ceux-ci et
Oxy₂ représente un oxyde choisi parmi Na₂O, K₂O ou un mélange de ceux-ci, de préférence Oxy₂ représente Na₂O, et
x est compris entre 0 et 98, et
y est compris entre 0 et 60, et
x et y ne sont pas simultanément nuls, et
z est compris entre 0 et 20, de préférence entre 0 et 10,
x + y + z est compris entre 40 et 98,
a est compris entre 1 et 50, de préférence entre 0.5 et 25,
b est compris entre 1 et 35, de préférence entre 1 et 35, et
k est compris entre 1 et 7, de préférence entre 0 et 5, et
x, y, z, a, b, et k sont tels que x + y + z + a + b + k = 100.

Le verre est donc obtenu par fusion de poudres d'oxydes de départ ou de leurs précurseurs à une température comprise entre 900°C et 1700°C. Il est à noter que les températures d'élaboration des verres diminuent avec l'augmentation de la teneur en oxyde de germanium (température de fusion d'environ 1000°C pour x=90 par exemple).

Les oxydes de départ et leurs éventuels précurseurs sont sous forme de poudres commerciales classiques (non-nanométriques). Les précurseurs d'oxydes peuvent être sous une forme permettant d'obtenir l'oxyde de départ par traitement thermique, notamment sous forme de carbonates. Par exemple, un précurseur de Na₂O peut être Na₂CO3, et K₂CO₃ peut être utilisé comme précurseur de K₂O.

Ainsi, de préférence, les matériaux selon la présente invention ne comprennent pas de fluorures, d'oxyfluorures ni de sulfures, mais uniquement des oxydes.

Le chauffage peut être réalisé dans un four classique, par exemple chauffé au gaz et/ou équipé de résistances chauffantes. Le mélange en fusion est ensuite refroidi, et éventuellement coulé dans un moule.

Le procédé peut également comprendre une étape supplémentaire de recuit visant à relâcher les éventuelles tensions présentes dans le verre.

Les verres selon l'invention subissent une démixtion, menant à une séparation de phase, de type nucléation/croissance ou spinodale selon la composition, obtenue directement dans le verre lors de la synthèse, et plus particulièrement lors de l'étape de refroidissement. Les différents domaines nanostructurés obtenus sont homogènes en composition et en taille et observent une répartition uniforme au sein de la matrice vitreuse. La taille des différents domaines ainsi obtenus est ajustable selon la composition, et dans une moindre mesure selon la vitesse de refroidissement du verre, mais reste nanométrique.

C'est la taille nanométrique de cette structuration qui assure une transparence aussi bien aux verres qu'aux vitrocéramiques selon l'invention. En effet, la diffusion lumineuse, dans un verre nanostructuré ou une vitrocéramique, est négligeable si le rapport entre la longueur d'onde incidente et la taille des domaines est au moins égal à 4. Par exemple, des nanocristaux de taille inférieure à 100 nm garantissent une transparence dans le visible (longueur d'onde supérieure à 400 nm), et à plus forte raison dans l'infrarouge.

Ainsi, les verres selon l'invention sont susceptibles d'être obtenus par :
1 - fusion des oxydes de départ, ou le cas échéant de leurs précurseurs, présents sous forme de poudre, à une température comprise entre 900°C et 1700°C ; et
2 - refroidissement.

La présente invention concerne également un procédé de fabrication d'une vitrocéramique transparente ou translucide nanostructurée. Ce procédé comprend une étape de fabrication d'un verre transparent telle que décrite ci-dessus, suivie d'une étape de traitement thermique de cristallisation du verre. L'étape de fabrication du verre comprend une étape de fusion des oxydes de départ, ou le cas échéant de leurs précurseurs, présents sous forme de poudre, suivie de la solidification du mélange fondu lors du refroidissement. L'étape de traitement thermique de cristallisation permet de cristalliser les nanodomaines dudit verre et de les transformer en nanocristaux.

Le procédé de fabrication d'une vitrocéramique selon l'invention comprend les étapes successives de :
1 - fabrication d'un verre nanostructuré transparent ou translucide ayant une teneur sensiblement nulle en Li₂O, Al₂O₃ et BaO, et comprenant au moins 97%, tel que de 97% à 100%, de préférence de 99 % à 100%, en masse, par rapport à la masse totale du matériau, d'une composition de formule I suivante :

   (GeO₂)ₓ(SiO₂)_{y}(B₂O₃)_{z}(Ga₂O₃)ₐ (Oxy₁)_{b}(Oxy₂)ₖ (I)

   où
   Oxy1 représente un oxyde choisi parmi ZnO, MgO, NbO_{2.5}, WO₃, NiO, SnO, TiO₂, BiO_{1.5}, AgO, CaO, MnO, ou un mélange de ceux-ci, de préférence choisi parmi ZnO, MgO, AgO, BiO_{1.5}, NbO₂.₅, ou un mélange de ceux-ci, et
   Oxy2 représente un oxyde choisi parmi Na₂O, K₂O ou un mélange de ceux-ci, de préférence Oxy2 représente Na₂O, et
   x est compris entre 0 et 98, et
   y est compris entre 0 et 60, et
   x et y ne sont pas simultanément nuls, et
   z est compris entre 0 et 20, de préférence entre 0 et 10,
   x, y, z sont tels que x+y+z est compris entre 40 et 98,
   a est compris entre 1 et 50, de préférence entre 1 et 25,
   b est compris entre 1 et 35, de préférence entre 1 et 25, et
   k est compris entre 1 et 7, de préférence entre 1 et 5, et
   x, y, z, a, b, et k sont tels que x + y + z + a + b + k = 100, selon un procédé comprenant les étapes successives de :
      fusion des oxydes de départ, ou le cas échéant de leurs précurseurs, présents sous forme de poudre, à une température comprise entre 900°C et 1700°C ; puis refroidissement;
2 - traitement thermique de cristallisation dudit verre à une température comprise entre 400°C et 900°C, de préférence entre 600°C et 800°C, pendant un temps compris entre 15 min et 48h, plus préférentiellement entre 15 min et 6h, encore plus préférentiellement entre 30 min et 2 h.

La composition des verres et vitrocéramiques peut être telle que décrite précédemment dans la présente invention.

Il est à noter que, de préférence, le procédé de fabrication des vitrocéramiques selon l'invention ne fait pas intervenir d'étape de nucléation lors du traitement de cristallisation. Il ne nécessite donc pas de traitement thermique de cristallisation en deux étapes ni l'utilisation d'agents nucléants. Les catalyseurs de nucléation sont en général ajoutés au matériau même si celui-ci comprend déjà un oxyde de ce type dans sa composition. En effet, le catalyseur joue un rôle spécifique différent de celui des oxydes de la composition du matériau selon l'invention.

Le procédé de fabrication des vitrocéramiques selon l'invention est donc plus simple et moins coûteux que le procédé décrit dans US 5,786,287.

En outre, les vitrocéramiques transparentes préparées par le procédé selon la présente invention peuvent être mises en forme facilement. En effet, le procédé verrier employé pour leur fabrication permet en général de réaliser, par coulée dans un moule, des pièces de formes très variées et de grandes dimensions. Il est impossible d'obtenir une telle variété de formes par les techniques d'élaboration de monocristaux ou des céramiques polycristallines issues de précurseurs nanométriques ultra-denses pour l'optique (obtenues par frittage sous haute pression et haute température). En effet, la forme des monocristaux est contrainte par le procédé de synthèse (barreau). Dans le cas des céramiques polycristallines transparentes issues de précurseurs nanométriques, le procédé de frittage utilisé nécessite une étape de pressage (sous pression élevée), incompatible avec l'obtention de formes variées (les formes classiques obtenues sous presse étant de type cylindrique ou parallélépipédique).

L'homme de l'art saura adapter le temps de traitement thermique de cristallisation de manière à obtenir des vitrocéramiques transparentes ou translucides.

Le four utilisé pour l'étape de traitement thermique de cristallisation est de préférence un four classique à convection et/ou équipé de résistances chauffantes.

Ainsi, les vitrocéramiques selon l'invention sont susceptibles d'être obtenues par traitement thermique de cristallisation d'un verre selon l'invention, à une température comprise entre 400°C et 900°C, de préférence entre 600°C et 800°C, pendant un temps compris entre 15 min et 48 h, de préférence entre 15 min et 6h, ou entre 30 min et 2 h. De préférence, le procédé ne fait pas intervenir d'étape de nucléation.

Il est à noter que la taille des cristaux obtenus dans la vitrocéramique est corrélée à la taille des nanodomaines (domaines de taille nanométrique) du verre correspondant, dans le sens où les nanocristaux correspondent quasi parfaitement aux nanodomaines vitreux. Ainsi, le traitement thermique de cristallisation modifie très peu la nanostructuration du matériau, et la matrice vitreuse ne cristallise sensiblement pas.

Sans vouloir être limité par l'interprétation qui suit, il a été observé expérimentalement que la composition du verre selon l'invention, notamment en fonction des paramètres x, y et k, de la composition de formule (I) telle que définie précédemment, permet d'influencer la taille des nanodomaines. Plus la valeur de x, et/ou y, et/ou k augmente, plus la taille des nanodomaines diminue.

En outre, dans une moindre mesure, la vitesse de refroidissement du verre influence également la taille des nanodomaines du verre : plus la vitesse de refroidissement est élevée, plus les nanodomaines (domaines de taille nanométrique) sont petits.

Ainsi, il est possible de contrôler les propriétés optiques, et en particulier la transparence, des matériaux selon l'invention, notamment en fonction des paramètres x, y et k, de la composition de formule (I) telle que définie précédemment.

Utilisation des vitrocéramiques et verres selon l'invention

La présente invention concerne enfin l'utilisation d'une vitrocéramique ou d'un verre selon l'invention pour la fabrication de matériaux pour l'optique, en particulier de types massifs (par exemple lentille ou filtre), poudres, fibres (par exemple fibre optique ou fibre laser) ou couches.

Les verres et vitrocéramiques selon la présente invention possèdent des propriétés de transparence à la fois dans les domaines visible et infrarouge, ouvrant la voie à de nombreuses applications optiques (matériaux photoniques ou de télécommunications, lasers aléatoires, etc...), en particulier lorsque les verres et vitrocéramiques selon la présente invention comprennent des dopants.

Notamment, les matériaux scintillateurs trouvent des applications dans le domaine de l'imagerie médicale ou dans le domaine de la physique des hautes énergies. Il existe également des applications nécessitant des performances moins élevées dans le domaine de la détection (par exemple en géologie). Les matériaux luminescents (fluorescents ou phosphorescents) trouvent des applications dans le domaine de l'éclairage et de l'affichage, par exemple ils peuvent être utilisés dans des LED (diodes électroluminescentes).

En particulier, les vitrocéramiques pour lesquels y est égal à 0 (germanates), présentent de très bonnes performances optiques, notamment dans l'infrarouge. En particulier, elles présentent des propriétés de transparences pour des longueurs d'onde comprises entre 400 nm et 8 µm. Elles sont donc tout à fait adaptées à une utilisation comme matériau laser ou scintillateur, en particulier lorsqu'elles comprennent des dopants, par exemple Ce, Eu, Pr, Nd, Tm, Dy, Er, Yb, Ho, Ti, Cr, Ni, Bi ou leurs mélanges.

Les vitrocéramiques pour lesquelles x est égal à 0 (silicates), quant à elles, sont moins coûteuses mais sont transparentes uniquement dans le domaine visible et proche infrarouge (longueur d'onde comprise entre 400 nm et 3 µm). Elles sont donc adaptées à des utilisations comme matériau pour la conversion de fréquence, notamment dans le domaine de l'éclairage, ou laser ou scintillateur. Dans le cas d'une utilisation en tant que matériau scintillateur ou pour laser, les vitrocéramiques selon la présente invention comprennent des dopants, notamment Ce, Eu, Pr, Nd, Er, Yb, Ho, Ti, Cr, Ni ou Bi, ou leurs mélanges.

Il est à noter que les vitrocéramiques selon la présente invention présentent des propriétés optiques et mécaniques supérieures aux verres correspondants.

Cependant, certaines applications ne nécessitent pas une très bonne résolution des raies mais plutôt une intensité lumineuse suffisamment forte. C'est le cas notamment pour l'affichage ou l'éclairage. Les verres sont alors parfaitement adaptés. Ainsi, selon un mode de réalisation, les verres et vitrocéramiques selon l'invention sont utilisés pour la fabrication de matériel pour l'éclairage ou pour l'affichage.

A l'inverse, dans le cas des vitrocéramiques, la diffusion peut être contrôlée afin de tirer profit des phénomènes de diffusion et de l'émission du matériau, ce qui permet par exemple d'obtenir un phénomène d'amplification du type laser aléatoire. Les vitrocéramiques selon l'invention sont utilisées pour la fabrication de lasers aléatoires.

Selon un mode de réalisation, les vitrocéramiques selon l'invention sont utilisées pour la fabrication de matériel médical, de préférence pour l'imagerie médicale. Un exemple d'une telle utilisation est décrit par de Chermont et al, Proc. Natl. Acad. Sci. U. S. A. 2007, 104 (22), 9266-9271.

Un cas particulier est l'utilisation d'un verre de l'invention pour l'inscription laser. Un balayage laser (parfaitement contrôlé par un programme de pilotage) peut induire in situ une cristallisation ponctuelle (sous l'impact du rayonnement et de l'échauffement local produit par le laser). Cette technique permet de faire un marquage du verre par contraste entre le verre et les points de vitrocéramique et un changement des caractéristiques de luminescence.

### DESCRIPTION DES FIGURES

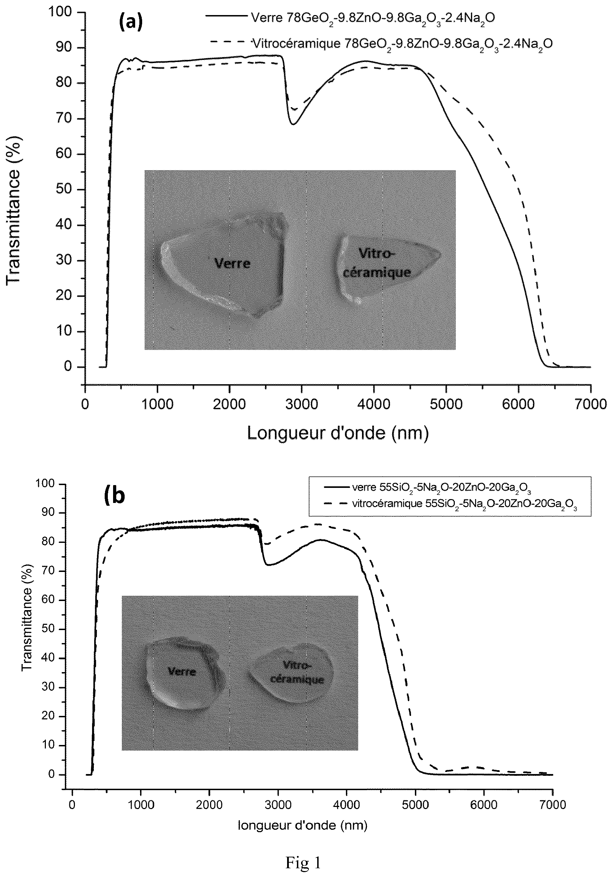

Figure 1 : Courbes de transmittance (en %, ordonnée) en fonction de la longueur d'onde (en nm, abscisse) de verres (en traits pleins) et vitrocéramiques (en pointillés) de (a) germanate (78GeO₂-9.8ZnO-9.8Ga₂O₃-2.4Na₂O) et (b) silicate (55SiO₂- 5Na₂O - 23Ga₂O₃- 17ZnO). Des photographies de verres (à gauche) et vitrocéramiques (à droite) nanostructurés transparents élaborés selon l'invention sont également présentés.
Figure 2 : Clichés de microscopie électronique en transmission (MET) d'un verre et d'une vitrocéramique de composition (n'étant pas selon l'invention): 84GeO₂ -6Ga2O₃ - 10ZnO (démixtion de type nucléation/croissance). A gauche, cliché du verre nanostructuré, à droite, cliché de la vitrocéramique correspondante obtenue par traitement thermique de cristallisation du verre. Les clichés de diffraction électronique associés sont présentés en encart.
Figure 3 : Cliché de microscopie électronique en transmission (MET) d'un verre nanostructuré (séparation de phase spinodale) de composition (n'étant pas selon l'invention) : 80GeO₂ -7.5Ga₂O₃-12.5ZnO.

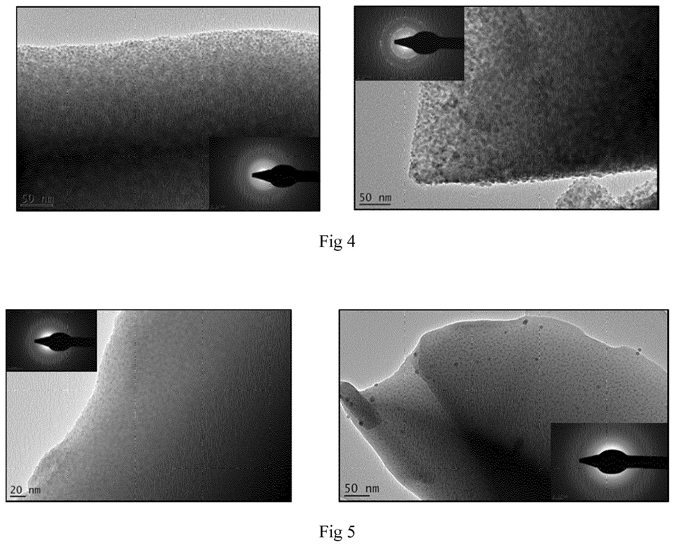

Figure 4 : Clichés de microscopie électronique en transmission (MET) d'un verre et d'une vitrocéramique de composition : 55SiO₂ - 5Na₂O - 20Ga₂O₃- 20ZnO. A gauche, cliché du verre nanostructuré (séparation de phase spinodale), à droite, cliché de la vitrocéramique correspondante obtenue par traitement thermique de cristallisation du verre.
Figure 5 : Clichés de microscopie électronique en transmission (MET) d'un verre et d'une vitrocéramique de composition (n'étant pas selon l'invention) : 90GeO₂ - 3,75Ga₂O₃ - 6,25Bi₂O₃. A gauche, cliché du verre nanostructuré (séparation de phase nucléation-croissance avec nanostructuration de très faible taille, de l'ordre de quelques nm), à droite, cliché de la vitrocéramique correspondante obtenue par traitement thermique de cristallisation du verre.

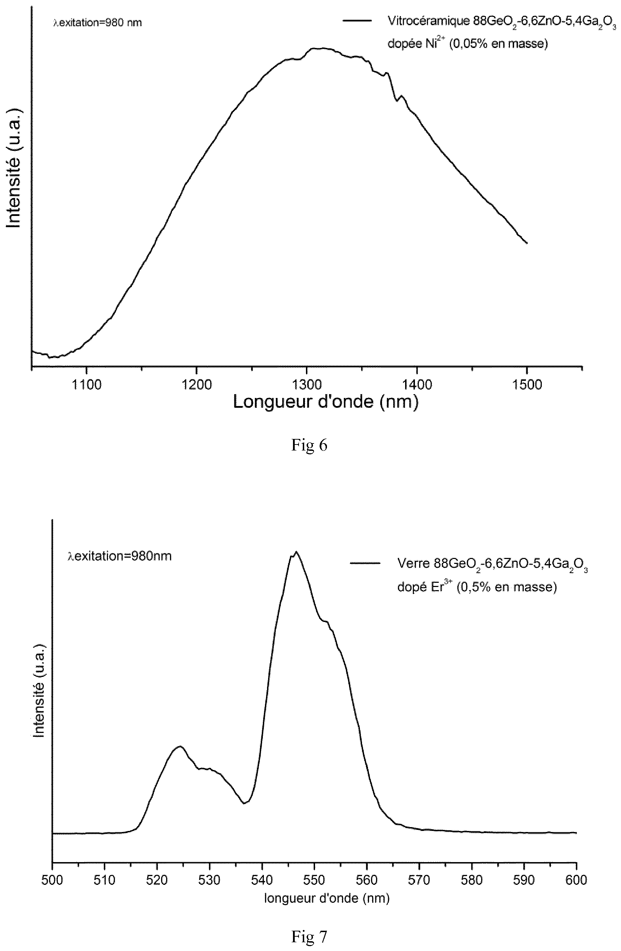

Figure 6 : Spectre de photoluminescence dans l'infrarouge (λ_{excitation} = 980 nm) d'une vitrocéramique nanostructurée de composition (n'étant pas selon l'invention) : 88GeO₂-5,4Ga₂O₃-6,6ZnO dopée au Nickel (Ni²⁺, 0.05% en masse). L'axe des abscisses représente les longueurs d'onde en nm, et l'axe des ordonnées correspond à l'intensité en u.a. (unité arbitraire).
Figure 7 : Spectre de photoluminescence de conversion en une longueur d'onde plus courte que la longueur d'onde d'émission (en anglais : "up-conversion") pour λ_{excitation} = 980 nm d'un verre nanostructurée de composition (n'étant pas selon l'invention) : 88GeO₂-5,4Ga₂O₃-6,6ZnO dopée avec 0.5% massique d'erbium (Er³⁺). L'axe des abscisses représente les longueurs d'onde en nm, et l'axe des ordonnées correspond à l'intensité en u.a.

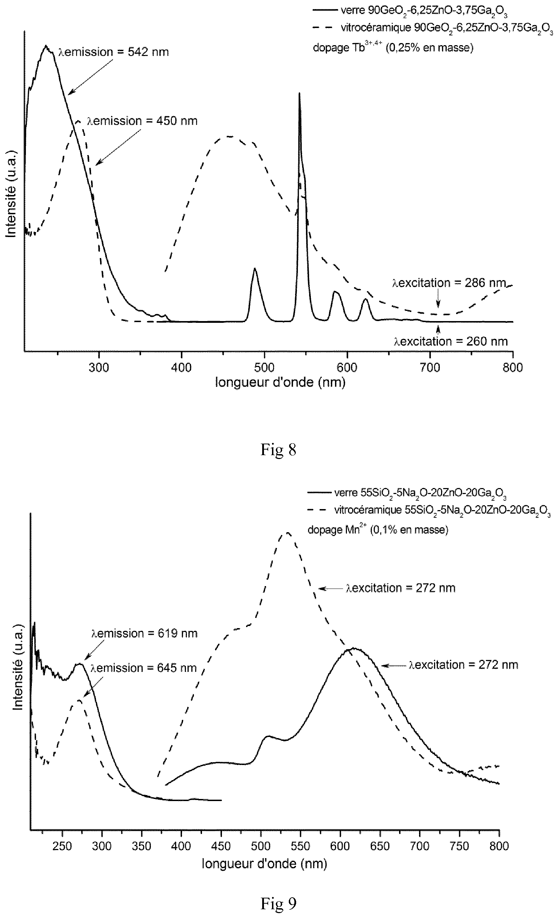

Figure 8 : Spectre d'excitation (à gauche) et d'émission (à droite) d'une vitrocéramique et d'un verre de germanate nanostructurés de composition (n'étant pas selon l'invention) : 90 GeO₂-6.25ZnO-3.75Ga₂O₃ dopés au terbium (Tb³⁺/Tb⁴⁺, 0.25% en masse). L'axe des abscisses représente les longueurs d'onde en nm, et l'axe des ordonnées correspond à l'intensité en u.a. Pour le verre, le spectre d'excitation correspond à l'émission mesurée à 542 nm, et le spectre d'émission correspond à une excitation à une longueur d'onde de 260 nm. Pour la vitrocéramique, le spectre d'excitation correspond à l'émission mesurée à 450 nm, et le spectre d'émission correspond à une excitation à une longueur d'onde de 286 nm. La courbe d'excitation du verre (en traits pleins) présente un maximum pour λ = 240 nm environ, tandis que la courbe d'excitation de la vitrocéramique (en pointillés) présente un maximum pour λ = 280 nm environ. La courbe d'émission du verre (en traits pleins) présente quatre pics fins, avec un pic très intense autour de 550 nm. La courbe d'émission de la vitrocéramique (en pointillés) présente un pic large, comprenant un épaulement plus fin vers 550 nm également.
Figure 9 : Spectre d'excitation (à gauche) et d'émission (à droite) d'une vitrocéramique et d'un verre de silicate nanostructurés de même composition dopé au manganèse (Mn²⁺, 0.1% en masse). L'axe des abscisses représente les longueurs d'onde en nm, et l'axe des ordonnées correspond à l'intensité en u.a. Pour le verre, le spectre d'excitation correspond à l'émission mesurée à 619 nm, et le spectre d'émission correspond à une excitation à une longueur d'onde de 272 nm. Pour la vitrocéramique, le spectre d'excitation correspond à l'émission mesurée à 645 nm, et le spectre d'émission correspond à une excitation à une longueur d'onde de 272 nm. La courbe d'excitation du verre (en traits pleins) présente un maximum pour λ = 275 nm environ avec une forte intensité, tandis que la courbe d'excitation de la vitrocéramique (en pointillés) présente un maximum pour λ = 270 nm environ, avec une intensité inférieure à celle du verre. La courbe d'émission du verre (en traits pleins) présente des pics larges, avec une intensité maximale pour λ = 625 nm environ, et se situe en-dessous de celle de la vitrocéramique (le signal du verre est moins intense que celui de la vitrocéramique). La courbe d'émission de la vitrocéramique (en pointillés) présente également des pics larges, avec une intensité maximale pour λ = 530 nm environ.

### EXEMPLES

Les exemples qui suivent sont destinés à illustrer plus en détails la présente invention, mais ne sont en aucun cas limitatifs. En particulier, les procédés décrits ci-après sont des procédés de laboratoire, qui sont facilement adaptables par l'homme du métier à une échelle industrielle.

Les poudres d'oxydes précurseurs ont tout d'abord été pesées dans les proportions souhaitées puis broyées et mélangées dans un mortier. Dans le cas de l'utilisation de carbonates, une étape de décarbonatation a été effectuée. Les verres et vitrocéramiques ont alors été synthétisés à partir des mélanges préparés comme décrit précédemment par fusion dans un four classique de laboratoire (équipé de résistances chauffantes) à une température comprise entre 900°C et 1700°C puis refroidissement du liquide. Les températures d'élaboration vitreuse diminuent avec l'augmentation de la teneur en oxyde de germanium. Dans le cas des vitrocéramiques, une étape de traitement thermique de cristallisation est alors réalisée dans un four classique de laboratoire à une température comprise entre 400°C et 900°C.

Exemple d'élaboration en laboratoire d'un verre et de la vitrocéramique correspondante, transposition à l'échelle industrielle.

### Protocole de fabrication du verre

Afin de préparer 2g du verre de composition molaire 78.04GeO₂-9.76ZnO-9.76Ga₂O₃ - 2.44Na₂O, les pesées suivantes sont réalisées :
1.4927g de GeO₂
0.1452g de ZnO
0.3344g de Ga₂O₃
0.0493g de Na₂CO₃

Après des pesées individuelles, l'ensemble de ces précurseurs est broyé et intiment mélangé dans un mortier en agate. Le mélange est ensuite placé dans un creuset en platine.

En raison de la présence du carbonate de sodium, le mélange subit alors un traitement de décarbonatation (chauffage progressif (10°C/min.) jusqu'à 900°C, maintien à cette température pendant 6h puis refroidissement dans le four qui est coupé) afin d'éliminer le CO₂ présent dans le carbonate de sodium, permettant ainsi d'obtenir l'oxyde de sodium de la composition.

Après ce traitement de décarbonatation (appliqué uniquement en cas de carbonate dans le mélange de précurseurs), le creuset en platine contenant le mélange des précurseurs est introduit à chaud à 1300°C dans un four à moufle et chauffé pendant 30 minutes. A l'issue de ce chauffage, le mélange fondu est sorti du four et refroidit dans le creuset (refroidissement à l'air).

On obtient ainsi un verre selon l'invention de formule 78.04GeO₂-9.76ZnO-9.76Ga₂O₃- 2.44Na₂O.

### Protocole de fabrication de la vitrocéramique

Le verre, synthétisé comme indiqué précédemment, subit ensuite un traitement thermique de cristallisation dans un four tubulaire (pendant 3h à 615°C) qui conduit à la vitrocéramique nanostructurée transparente.

### Transposition à l'échelle industrielle

Dans le cas d'un procédé industriel, pour des questions de coût énergétique, certaines étapes peuvent être modifiées. La phase de décarbonatation par exemple est directement intégrée dans la phase de chauffage (une seule étape). Des additifs d'affinage classiques pour l'homme du métier peuvent également être ajoutés pour faciliter la fusion du verre et l'élimination des bulles. D'autre part, le recuit de cristallisation peut être effectué lors du refroidissement du verre, par exemple directement sur un moule contenant le verre fondu (moule maintenu 3h dans un four à 615°C).

La transmission des verres et vitrocéramiques a été mesurée dans le domaine spectral 250-8000 nm, en utilisant un spectrophotomètre double faisceau.

Selon un protocole similaire, ont été synthétisés des verres et vitrocéramiques, correspondant à des compositions de formule (I)

(GeO₂)ₓ(SiO₂)_{y}(B₂O₃)_{z}(Ga₂O₃)ₐ (Oxy₁)_{b}(Oxy₂)ₖ (I)

dans laquelle:

**Tableau récapitulatif des compositions synthétisées**

| Germanate | | | | | | |
|---|---|---|---|---|---|---|
| | x | y | z | a | b (Oxy1) | k (Oxy2) |
| COMPARATIF 98GeO₂ - 0,75Ga₂O₃ - 1,25ZnO | 98 | 0 | 0 | 0.75 | 1.25 (ZnO) | 0 |
| 60GeO₂ - 3Na₂O - 13,9Ga₂O₃ - 23,1ZnO | 60 | 0 | 0 | 13.9 | 23.1 (ZnO) | 3 (Na₂O) |
| COMPARATIF 90GeO₂ - 3,75Ga₂O₃ - 6,25AgO | 90 | 0 | 0 | 3.75 | 6.25 (AgO) | 0 |
| COMPARATIF 84GeO₂ - 6Ga₂O₃ - 10ZnO | 84 | 0 | 0 | 6 | 10 (ZnO) | 0 |
| 60GeO₂ - 3Na₂O - 13,9Ga₂O₃ - 23,1MgO | 60 | 0 | 0 | 13.9 | 23.1 (MgO) | 3 (Na₂O) |
| COMPARATIF 92GeO₂ - 2Ga₂O₃ - 6Bi₂O₃ | 86.8 | 0 | 0 | 1.9 | 11.3 (BiO_{1.5}) | 0 |
| 87GeO₂ - 1K₂O - 3Ga₂O₃ - 9WO₃ | 87 | 0 | 0 | 3 | 9 (WO₃) | 1 (K₂O) |
| COMPARATIF 90GeO₂ - 3,75Ga₂O₃ - 6,25ZnO | 90 | 0 | 0 | 3.75 | 6.25 (ZnO) | 0 |
| COMPARATIF 90GeO₂ - 3,75Ga₂O₃ - 6,25Bi₂O₃ | 84.7 | 0 | 0 | 3.5 | 11.8 (BiO_{1.5}) | 0 |
| COMPARATIF 88GeO₂ - 5,4Ga₂O₃ - 6,6ZnO | 88 | 0 | 0 | 5.4 | 6.6 (ZnO) | 0 |
| 78.04GeO₂-9.76ZnO-9.76Ga₂O₃ - 2.44Na₂O | 78.04 | 0 | 0 | 9.76 | 9.76 (ZnO) | 2.44 (Na₂O) |

| silicate | | | | | | |
|---|---|---|---|---|---|---|
| | x | y | z | a | b (Oxy1) | k (Oxy2) |
| 55SiO₂ - 5Na₂O - 23Ga₂O₃ - 17ZnO | 0 | 55 | 0 | 23 | 17 (ZnO) | 5 (Na₂O) |
| 44SiO₂ - 6Na₂O - 25Ga₂O₃ - 25MgO | 0 | 44 | 0 | 25 | 25 (MgO) | 6 (Na₂O) |
| 60SiO₂ - 5Na₂O - 1K₂O - 20Ga₂O₃ -10ZnO-4Nb₂O₅ | 0 | 57.8 | 0 | 19.2 | 17.3 (7.7 NbO_{2.5}, 9.6 ZnO) | 5.7 (4.8 Na₂O, 0.9 K₂O) |
| COMPARATIF 55SiO₂ - 5Na₂O - 20Ga₂O₃ - 20ZnO | 0 | 55 | 0 | 20 | 20 (ZnO) | 0 |

| silicogermante | | | | | | |
|---|---|---|---|---|---|---|
| | x | y | z | a | b (Oxy1) | k (Oxy2) |
| COMPARATIF 42GeO₂ - 50SiO₂ -3Ga₂O₃ - 5ZnO | 42 | 50 | 0 | 3 | 5 (ZnO) | 0 |
| 70GeO₂ - 10SiO₂ - 2Na₂O - 4Ga₂O₃ -4Bi₂O₃ | 67.4 | 9.6 | 0 | 3.8 | 7.7 (BiO_{1.5}) | 1.9 (Na₂O) |
| COMPARATIF 50GeO₂ - 30SiO₂ - 10B₂O₃ - 5Ga₂O₃ - 5ZnO | 50 | 30 | 10 | 5 | 5 (ZnO) | 0 |

Le cas échéant, des dopants ont été ajoutés à ces compositions. Lors du procédé de fabrication de verres et vitrocéramiques dopés, les dopants sont ajoutés sous forme de poudres, puis broyés et mélangés aux autres poudres de précurseurs, tel que décrit plus haut dans l'exemple de synthèse du verre de formule 78.04GeO₂-9.76ZnO-9.76Ga₂O₃ -2.44Na₂O.

Des photographies de verres et vitrocéramiques de (a) germanate (78GeO₂-9.8ZnO-9.8Ga₂O₃-2.4Na₂O) et (b) silicate (55SiO₂ - 5Na₂O - 23Ga₂O₃ - 17ZnO) sont présentées dans la figure 1. Elles mettent en évidence la transparence des matériaux selon l'invention.

Par ailleurs, la figure 2 montre des clichés de microscopie électronique en transmission (MET) d'un verre et d'une vitrocéramique de composition : 84GeO₂ - 6Ga₂O₃ - 10ZnO, Le cliché du verre fait apparaître une démixtion de type nucléation/croissance de taille nanométrique.

La figure 3 présente des clichés de microscopie électronique en transmission (MET) d'un verre nanostructuré à séparation de phase spinodale de composition (n'étant pas selon l'invention) : 80GeO₂ -7.5Ga₂O₃ - 12.5ZnO.

La figure 4 illustre quant à elle des compositions de verre et d'une vitrocéramique de composition : 55SiO₂ - 5Na₂O - 20Ga₂O₃ - 20ZnO (clichés de microscopie électronique en transmission MET). Le verre présente dans ce cas une séparation de phase spinodale de taille nanométrique.

La figure 5 présente des clichés de microscopie électronique en transmission (MET) d'un verre nanostructuré à séparation de phase nucléation-croissance avec une nanostructuration de très faible taille, de l'ordre de quelques nm, et d'une vitrocéramique, de composition (n'étant pas selon l'invention) : 90GeO₂ - 3,75Ga₂O₃ - 6,25Bi₂O₃.

La figure 6 décrit un spectre de photoluminescence dans l'infrarouge (λ_{excitation} = 980 nm) d'une vitrocéramique nanostructurée de composition (n'étant pas selon l'invention) : 88GeO₂-5,4Ga₂O₃-6,6ZnO dopée au Nickel (Ni²⁺, 0.05% en masse).

Les figures 7 à 9 présentent des spectres illustrant les propriétés optiques de verres et vitrocéramiques (n'étant pas selon l'invention) de composition 88GeO₂-5,4Ga₂O₃-6,6ZnO dopée avec 0.5% massique d'erbium (Er³⁺), 90GeO₂-6.25ZnO-3.75Ga₂O₃ dopés au terbium (Tb³⁺/Tb⁴⁺, 0.25% en masse) et 90 GeO₂-6.25ZnO-3.75Ga₂O₃ dopés au manganèse (Mn²⁺, 0.1% en masse).

## Revendications

1. Vitrocéramique nanostructurée, et transparente ou translucide,
ayant une teneur sensiblement nulle en Li₂O, Al₂O₃ et BaO, et
comprenant au moins 97%, tel que de 97% à 100%, de préférence de 99 % à 100% en masse, par rapport à la masse totale du matériau, d'une composition de formule I suivante :
(GeO₂)ₓ(SiO₂)_{y}(B₂O₃)_{z}(Ga₂O₃)ₐ (Oxy₁)_{b}(Oxy₂)ₖ (I)
où
Oxy₁ représente un oxyde choisi parmi ZnO, MgO, NbO_{2.5}, WO₃, NiO, SnO, TiO₂, BiO_{1.5}, AgO, CaO, MnO, ou un mélange de ceux-ci, de préférence choisi parmi ZnO, MgO, AgO, BiO_{1.5}, NbO_{2.5}, ou un mélange de ceux-ci, et
Oxy₂ représente un oxyde choisi parmi Na₂O, K₂O ou un mélange de ceux-ci, de préférence Oxy₂ représente Na₂O, et
x est compris entre 0 et 98, et
y est compris entre 0 et 60, et
x et y ne sont pas simultanément nuls, et
z est compris entre 0 et 20, de préférence entre 0 et 10,
x, y, z sont tels que x+y+z est compris entre 40 et 98,
a est compris entre 1 et 50, de préférence entre 1 et 25,
b est compris entre 1 et 35, de préférence entre 1 et 25, et
k est compris entre 1 et 7, de préférence entre 1 et 5, et
x, y, z, a, b, et k sont tels que x + y + z + a + b + k = 100.

2. Verre nanostructuré, et transparent ou translucide,
ayant une teneur sensiblement nulle en Li₂O, Al₂O₃ et BaO, et comprenant au moins 97%, tel que de 97% à 100%, de préférence de 99 % à 100% en masse, par rapport à la masse totale du matériau, d'une composition de formule I suivante :
(GeO₂)ₓ(SiO₂)_{y}(B₂O₃)_{z}(Ga₂O₃)ₐ (Oxy₁)_{b}(Oxy₂)ₖ (I)
où
Oxy₁ représente un oxyde choisi parmi ZnO, MgO, NbO_{2.5}, WO₃, NiO, SnO, TiO₂, BiO_{1.5}, AgO, CaO, MnO, ou un mélange de ceux-ci, de préférence choisi parmi ZnO, MgO, AgO, BiO_{1.5}, NbO_{2.5}, ou un mélange de ceux-ci, et
Oxy₂ représente un oxyde choisi parmi Na₂O, K₂O ou un mélange de ceux-ci, de préférence Oxy₂ représente Na₂O, et
x est compris entre 0 et 98, et
y est compris entre 0 et 60, et
x et y ne sont pas simultanément nuls, et
z est compris entre 0 et 20, de préférence entre 0 et 10,
x, y, z sont tels que x+y+z est compris entre 40 et 98,
a est compris entre 1 et 50, de préférence entre 1 et 25,
b est compris entre 1 et 35, de préférence entre 1 et 25, et
k est compris entre 1 et 7, de préférence entre 1 et 5, et
x, y, z, a, b, et k sont tels que x + y + z + a + b + k = 100.

3. Vitrocéramique selon la revendication 1 ou verre selon la revendication 2, **caractérisé en ce que** x et y sont tels que x + y ≥ 40, de préférence x + y ≥ 50.

4. Vitrocéramique selon la revendication 1 ou 3 ou verre selon la revendication 2 ou 3, **caractérisé en ce que** x est égal à 0.

5. Vitrocéramique ou verre selon la revendication 4, **caractérisé en ce que** y est compris entre 40 et 60, de préférence entre 43 et 55.

6. Vitrocéramique selon l'une quelconque des revendications 1 ou 3 ou verre selon la revendication 2, **caractérisé en ce que** y est égal à 0.

7. Vitrocéramique ou verre selon la revendication 6, **caractérisé en ce que** x est compris entre 50 et 98, de préférence entre 60 et 98.

8. Vitrocéramique ou verre selon la revendication 6 ou 7, **caractérisé en ce que** z est égal à 0.

9. Vitrocéramique selon la revendication 1 ou 3 ou verre selon l'une quelconque des revendications 2 ou 3, **caractérisé en ce que** x et y sont tous deux différents de 0.

10. Vitrocéramique ou verre selon la revendication 9, **caractérisé en ce que** x et y sont chacun indépendamment compris entre :
- 10 et 80, de préférence entre 30 et 70 pour x ; et
- 10 et 60, de préférence entre 30 et 60 pour y.

11. Vitrocéramique ou verre selon la revendication 9 ou 10, **caractérisé en ce que** x et y sont tels que x+y est compris entre 50 et 95, encore plus préférentiellement entre 60 et 98, encore plus préférentiellement entre 80 et 95.

12. Vitrocéramique selon l'une quelconque des revendications 1 et 3 à 11 ou verre selon l'une quelconque des revendications 2 à 11, comprenant des dopants en complément de la composition de formule (I) pour atteindre les 100% massique.

13. Procédé de fabrication d'un verre nanostructuré selon l'une quelconque des revendications 2 à 12, comprenant les étapes successives de :
1 - fusion des oxydes de départ, ou le cas échéant de leurs précurseurs, présents sous forme de poudre, à une température comprise entre 900°C et 1700°C ;
2 - refroidissement,
menant à un verre transparent ou translucide nanostructuré ayant une teneur sensiblement nulle en Li₂O, Al₂O₃ et BaO, **et** comprenant au moins 97%, tel que de 97% à 100%, de préférence de 99 % à 100%, en masse, par rapport à la masse totale du verre, d'une composition de formule I suivante :
(GeO₂)ₓ(SiO₂)_{y}(B₂O₃)_{z}(Ga₂O₃)ₐ (Oxy₁)_{b}(Oxy₂)ₖ (I)
où
Oxy₁ représente un oxyde choisi parmi ZnO, MgO, NbO_{2.5}, WO₃, NiO, SnO, TiO₂, BiO_{1.5}, AgO, CaO, MnO, ou un mélange de ceux-ci, de préférence choisi parmi ZnO, MgO, AgO, BiO_{1.5} NbO_{2.5} ou un mélange de ceux-ci, et
Oxy₂ représente un oxyde choisi parmi Na₂O, K₂O ou un mélange de ceux-ci, de préférence Oxy₂ représente Na₂O, et
x est compris entre 0 et 98, et
y est compris entre 0 et 60, et
x et y ne sont pas simultanément nuls, et
z est compris entre 0 et 20, de préférence entre 0 et 10,
x + y + z est compris entre 40 et 98,
a est compris entre 1 et 50, de préférence entre 1 et 25,
b est compris entre 1 et 35, de préférence entre 1 et 25, et
k est compris entre 1 et 7, de préférence entre 1 et 5, et
x, y, z, a, b, et k sont tels que x + y + z + a + b + k = 100.

14. Procédé de fabrication d'une vitrocéramique nanostructurée selon l'une quelconque des revendications 1 et 3 à 12, comprenant les étapes successives de :
1 - fabrication d'un verre nanostructuré transparent ou translucide ayant une teneur sensiblement nulle en Li₂O et comprenant au moins 97%, tel que de 97% à 100%, de préférence de 99 % à 100%, en masse, par rapport à la masse totale du matériau, d'une composition de formule I suivante :
(GeO₂)ₓ(SiO₂)_{y}(B₂O₃)_{z}(Ga₂O₃)ₐ (Oxy₁)_{b}(Oxy₂)ₖ (I)
où
Oxy₁ représente un oxyde choisi parmi ZnO, MgO, NbO_{2.5}, WO₃, NiO, SnO, TiO₂, BiO_{1.5}, AgO, CaO, MnO, ou un mélange de ceux-ci, de préférence choisi parmi ZnO, MgO, AgO, BiO_{1.5}, NbO_{2.5}, ou un mélange de ceux-ci, et
Oxy₂ représente un oxyde choisi parmi Na₂O, K₂O ou un mélange de ceux-ci, de préférence Oxy₂ représente Na₂O, et
x est compris entre 0 et 98, et
y est compris entre 0 et 60, et
x et y ne sont pas simultanément nuls, et
z est compris entre 0 et 20, de préférence entre 0 et 10,
x, y, z sont tels que x+y+z est compris entre 40 et 98,
a est compris entre 1 et 50, de préférence entre 1 et 25,
b est compris entre 1 et 35, de préférence entre 1 et 25, et
k est compris entre 1 et 7, de préférence entre 1 et 5, et
x, y, z, a, b, et k sont tels que x + y + z + a + b + k = 100, selon un procédé comprenant les étapes successives de :
fusion des oxydes de départ, ou le cas échéant de leurs précurseurs, présents sous forme de poudre, à une température comprise entre 900°C et 1700°C ; puis refroidissement;
2 - traitement thermique de cristallisation de ce verre à une température comprise entre 400°C et 900°C, de préférence entre 600°C et 800°C, pendant un temps compris entre 15 min et 48, plus préférentiellement entre 15 min et 6h, encore plus préférentiellement entre 30 min et 2 h.

15. Utilisation d'un verre selon l'une quelconque des revendications 2 à 12 ou d'une vitrocéramique selon l'une quelconque des revendications 1 et 3 à 12 pour la fabrication de matériaux optiques, en particulier de types massifs, poudres, fibres ou couches.

16. Utilisation selon la revendication 15 pour la fabrication de matériaux pour l'imagerie médicale, pour l'éclairage ou pour l'affichage.

17. Utilisation d'un verre selon l'une quelconque des revendications 2 à 12 pour l'inscription laser.

## Patentansprüche

1. Nanostrukturierte und transparente oder lichtdurchlässige Vitrokeramik,
die einen Gehalt von im Wesentlichen null an Li₂O, Al₂O₃ und BaO aufweist, und
mindestens 97 Ma%, wie von 97 Ma% bis 100 Ma%, vorzugsweise von 99 Ma% bis 100 Ma%, in Bezug auf die Gesamtmasse des Werkstoffes, einer Zusammensetzung der folgenden Formel I umfasst:
(GeO₂)ₓ(SiO₂)_{y}(B₂O₃)_{z}(Ga₂O₃)ₐ(Oxy₁)_{b}(Oxy₂)ₖ (I)
wobei
Oxy₁ ein Oxid repräsentiert, das aus ZnO, MgO, NbO_{2,5}, WO₃, NiO, SnO, TiO₂, BiO_{1,5}, AgO, CaO, MnO, oder einem Gemisch derselben ausgewählt ist, vorzugsweise ausgewählt aus ZnO, MgO, AgO, BiO_{1,5}, NbO_{2,5}, oder einem Gemisch derselben, und
Oxy₂ ein Oxid repräsentiert, das aus Na₂O, K₂O oder einem Gemisch derselben ausgewählt wird, Oxy₂ vorzugsweise Na₂O repräsentiert, und
x zwischen 0 und 98 enthalten ist, und
y zwischen 0 und 60 enthalten ist, und
x und y nicht gleichzeitig null sind, und
z zwischen 0 und 20, vorzugsweise zwischen 0 und 10 enthalten ist,
x, y, z derart sind, dass x+y+z zwischen 40 und 98 enthalten sind,
a zwischen 1 und 50, vorzugsweise zwischen 1 und 25 enthalten ist,
b zwischen 1 und 35, vorzugsweise zwischen 1 und 25 enthalten ist, und
k zwischen 1 und 7, vorzugsweise zwischen 1 und 5 enthalten ist, und
x, y, z, a, b, und k derart sind, dass x + y + z + a + b + k = 100.

2. Nanostrukturiertes und transparentes oder lichtdurchlässiges Glas,
das einen Gehalt von im Wesentlichen Null an Li₂O, Al₂O₃ und BaO aufweist, und
mindestens 97 Ma%, wie von 97 Ma% bis 100 Ma%, vorzugsweise von 99 Ma% bis 100 Ma% in Bezug auf die Gesamtmasse des Werkstoffes, einer Zusammensetzung der folgenden Formel I umfasst:
(GeO₂)ₓ(SiO₂)_{y}(B₂O₃)_{z}(Ga₂O₃)ₐ(Oxy₁)_{b}(Oxy₂)ₖ (I)
wobei
Oxy₁ ein Oxid repräsentiert, das aus ZnO, MgO, NbO_{2,5}, WO₃, NiO, SnO, TiO₂, BiO_{1,5}, AgO, CaO, MnO, oder einem Gemisch derselben ausgewählt wird, vorzugsweise ausgewählt aus ZnO, MgO, AgO, BiO_{1,5}, NbO_{2,5}, oder einem Gemisch derselben, und
Oxy₂ ein Oxid repräsentiert, das aus Na₂O, K₂O oder einem Gemisch derselben ausgewählt wird, Oxy₂ vorzugsweise Na₂O repräsentiert, und
x zwischen 0 und 98 enthalten ist, und
y zwischen 0 und 60 enthalten ist, und
x und y nicht gleichzeitig null sind, und
z zwischen 0 und 20, vorzugsweise zwischen 0 und 10 enthalten ist,
x, y, z derart sind, dass x+y+z zwischen 40 und 98 enthalten ist,
a zwischen 1 und 50, vorzugsweise zwischen 1 und 25 enthalten ist,
b zwischen 1 und 35, vorzugsweise zwischen 1 und 25 enthalten ist, und
k zwischen 1 und 7, vorzugsweise zwischen 1 und 5 enthalten ist, und
x, y, z, a, b, und k derart sind, dass x + y + z + a + b + k = 100.

3. Vitrokeramik nach Anspruch 1 oder Glas nach Anspruch 2, **dadurch gekennzeichnet, dass** x und y derart sind, dass x + y ≥ 40, vorzugsweise x + y ≥ 50 ist.

4. Vitrokeramik nach Anspruch 1 oder 3 oder Glas nach Anspruch 2 oder 3, **dadurch gekennzeichnet, dass** x gleich 0 ist.

5. Vitrokeramik oder Glas nach Anspruch 4, **dadurch gekennzeichnet, dass** y zwischen 40 und 60, vorzugsweise zwischen 43 und 55 enthalten ist.

6. Vitrokeramik nach einem der Ansprüche 1 oder 3 oder Glas nach Anspruch 2, **dadurch gekennzeichnet, dass** y gleich 0 ist.

7. Vitrokeramik oder Glas nach Anspruch 6, **dadurch gekennzeichnet, dass** x zwischen 50 und 98, vorzugsweise zwischen 60 und 98 enthalten ist.

8. Vitrokeramik oder Glas nach Anspruch 6 oder 7, **dadurch gekennzeichnet, dass** z gleich 0 ist.

9. Vitrokeramik nach Anspruch 1 oder 3 oder Glas nach einem der Ansprüche 2 oder 3, **dadurch gekennzeichnet, dass** x und y alle beide ungleich 0 sind.

10. Vitrokeramik oder Glas nach Anspruch 9, **dadurch gekennzeichnet, dass** x und y jeweils unabhängig enthalten sind zwischen:
- 10 und 80, vorzugsweise zwischen 30 und 70 für x; und
- 10 und 60, vorzugsweise zwischen 30 und 60 für y.

11. Vitrokeramik oder Glas nach Anspruch 9 oder 10, **dadurch gekennzeichnet, dass** x und y derart sind, dass x+y zwischen 50 und 95, noch bevorzugter zwischen 60 und 98, noch bevorzugter zwischen 80 und 95 enthalten ist.

12. Vitrokeramik nach einem der Ansprüche 1 und 3 bis 11 oder Glas nach einem der Ansprüche 2 bis 11, Dotierungen ergänzend zur Zusammensetzung der Formel (I) umfassend, um die 100 Ma% zu erreichen.

13. Verfahren zur Herstellung eines nanostrukturierten Glases nach einem der Ansprüche 2 bis 12, umfassend die aufeinanderfolgenden Schritte zum:
1 - Schmelzen der Ausgangsoxide, oder gegebenenfalls deren Vorläufer, die in Form von Pulver vorhanden sind, bei einer Temperatur, die zwischen 900 °C und 1 700 °C enthalten ist;
2 - Abkühlen,
was zu einem transparenten oder lichtdurchlässigen nanostrukturierten Glas führt, das einen Gehalt von im Wesentlichen null an Li₂O, Al₂O₃ und BaO aufweist, und mindestens 97 Ma%, wie von 97 Ma% bis 100 Ma%, vorzugsweise von 99 Ma% bis 100 Ma%, in Bezug auf die Gesamtmasse des Glases, einer Zusammensetzung der folgenden Formel I umfasst:
(GeO₂)ₓ(SiO₂)_{y}(B₂O₃)_{z}(Ga₂O₃)ₐ(Oxy₁)_{b}(Oxy₂)ₖ (I)
wobei
Oxy₁ ein Oxid repräsentiert, das aus ZnO, MgO, NbO_{2,5}, WO₃, NiO, SnO, TiO₂, BiO_{1,5}, AgO, CaO, MnO, oder einem Gemisch derselben ausgewählt wird, vorzugsweise ausgewählt aus ZnO, MgO, AgO, BiO_{1,5} NbO_{2,5} oder einem Gemisch derselben, und
Oxy₂ ein Oxid repräsentiert, das aus Na₂O, K₂O oder einem Gemisch derselben ausgewählt wird, wobei Oxy₂ vorzugsweise Na₂O repräsentiert, und
x zwischen 0 und 98 enthalten ist, und
y zwischen 0 und 60 enthalten ist, und
x und y nicht gleichzeitig null sind, und
z zwischen 0 und 20, vorzugsweise zwischen 0 und 10 enthalten ist,
x + y + z zwischen 40 und 98 enthalten ist,
a zwischen 1 und 50, vorzugsweise zwischen 1 und 25 enthalten ist,
b zwischen 1 und 35, vorzugsweise zwischen 1 und 25 enthalten ist, und
k zwischen 1 und 7, vorzugsweise zwischen 1 und 5 enthalten ist, und
x, y, z, a, b, und k derart sind, dass x + y + z + a + b + k = 100.

14. Verfahren zur Herstellung einer nanostrukturierten Vitrokeramik nach einem der Ansprüche 1 und 3 bis 12, umfassend die aufeinanderfolgenden Schritte zum:
1 - Herstellen eines nanostrukturierten, transparenten oder lichtdurchlässigen Glases, das einen Gehalt von im Wesentlichen null an Li₂O aufweist, und mindestens 97 Ma%, wie von 97 Ma% bis 100 Ma%, vorzugsweise von 99 Ma% bis 100 Ma% in Bezug auf die Gesamtmasse des Werkstoffes, einer Zusammensetzung der folgenden Formel I umfasst:
(GeO₂)ₓ(SiO₂)_{y}(B₂O₃)_{z}(Ga₂O₃)ₐ(Oxy₁)_{b}(Oxy₂)ₖ (I)
wobei
Oxy₁ ein Oxid repräsentiert, das aus ZnO, MgO, NbO_{2,5}, WO₃, NiO, SnO, TiO₂, BiO_{1,5}, AgO, CaO, MnO, oder einem Gemisch derselben ausgewählt wird, vorzugsweise ausgewählt aus ZnO, MgO, AgO, BiO_{1,5}, NbO_{2,5}, oder einem Gemisch derselben, und
Oxy₂ ein Oxid repräsentiert, das aus Na₂O, K₂O* oder einem Gemisch derselben ausgewählt wird, wobei Oxy₂ vorzugsweise Na₂O repräsentiert, und
x zwischen 0 und 98 enthalten ist, und
y zwischen 0 und 60 enthalten ist, und
x und y nicht gleichzeitig null sind, und
z zwischen 0 und 20, vorzugsweise zwischen 0 und 10 enthalten ist,
x, y, z derart sind, dass x+y+z zwischen 40 und 98 enthalten sind,
a zwischen 1 und 50, vorzugsweise zwischen 1 und 25 enthalten ist,
b zwischen 1 und 35, vorzugsweise zwischen 1 und 25 enthalten ist, und
k zwischen 1 und 7, vorzugsweise zwischen 1 und 5 enthalten ist, und
x, y, z, a, b, und k derart sind, dass x + y + z + a + b + k = 100, gemäß einem Verfahren, das die folgenden aufeinanderfolgenden Schritte umfasst:
Schmelzen der Ausgangsoxide, oder gegebenenfalls deren Vorläufer, die in Form von Pulver vorhanden sind, bei einer Temperatur, die zwischen 900 °C und 1 700 °C enthalten ist; danach Abkühlen;
2 - Kristallisationswärmebehandlung dieses Glases bei einer Temperatur, die zwischen 400 °C und 900 °C, vorzugsweise zwischen 600 °C und 800 °C enthalten ist, eine Zeit lang, die zwischen 15 Min. und 48, bevorzugter 15 Min. und 6 Std., noch bevorzugter zwischen 30 Min. und 2 Std. enthalten ist.

15. Verwendung eines Glases nach einem der Ansprüche 2 bis 12 oder einer Vitrokeramik nach einem der Ansprüche 1 und 3 bis 12 zur Herstellung optischer Werkstoffe, insbesondere in den Arten Massive, Pulver, Fasern oder Schichten.

16. Verwendung nach Anspruch 15 zur Herstellung von Werkstoffen zur medizinischen Bildgebung, zur Beleuchtung oder zur Anzeige.

17. Verwendung eines Glases nach einem der Ansprüche 2 bis 12 zur Laserbeschriftung.

## Claims

1. A nanostructured, and transparent or translucent vitroceramics,
having a substantially zero content of Li₂O, Al₂O₃ and BaO, and
comprising at least 97%, such as from 97% to 100%, preferably from 99% to 100% by mass, relative to the total mass of the material, of a composition of formula I below:
(GeO₂)ₓ(SiO₂)_{y}(B₂O₃)_{z}(Ga₂O₃)ₐ (Oxy₁)_{b}(Oxy₂)ₖ (I)
where
Oxy₁ represents an oxide selected from ZnO, MgO, NbO_{2.5}, WO₃, NiO, SnO, TiO₂, BiO_{1.5}, AgO, CaO, MnO, or a mixture thereof, preferably selected from ZnO, MgO, AgO, BiO_{1.5}, NbO_{2.5}, or a mixture thereof, and
Oxy₂ represents an oxide selected from Na₂O, K₂O or a mixture thereof, preferably Oxy₂ represents Na₂O, and
x is comprised between 0 and 98, and
y is comprised between 0 and 60, and
x and y are not simultaneously zero, and
z is comprised between 0 and 20, preferably between 0 and 10,
x, y, z are such that x + y + z is comprised between 40 and 98,
a is comprised between 1 and 50, preferably between 1 and 25,
b is comprised between 1 and 35, preferably between 1 and 25, and
k is comprised between 1 and 7, preferably between 1 and 5, and
x, y, z, a, b, and k are such that x + y + z + a + b + k = 100.

2. A nanostructured, transparent or translucent lens,
having a substantially zero content of Li₂O, Al₂O₃ and BaO, and
comprising at least 97%, such as from 97% to 100%, preferably from 99% to 100% by mass, relative to the total mass of the material, of a composition of formula I below:
(GeO₂)ₓ(SiO₂)_{y}(B₂O₃)_{z}(Ga₂O₃)ₐ (Oxy₁)_{b}(Oxy₂)ₖ (I)
where
Oxy₁ represents an oxide selected from ZnO, MgO, NbO_{2.5}, WO₃, NiO, SnO, TiO₂, BiO_{1.5}, AgO, CaO, MnO, or a mixture thereof, preferably selected from ZnO, MgO, AgO, BiO_{1.5}, NbO_{2.5}, or a mixture thereof, and
Oxy₂ represents an oxide selected from Na₂O, K₂O or a mixture thereof, preferably Oxy₂ represents Na₂O, and
x is comprised between 0 and 98, and
y is comprised between 0 and 60, and
x and y are not simultaneously zero, and
z is comprised between 0 and 20, preferably between 0 and 10,
x, y, z are such that x + y + z is comprised between 40 and 98,
a is comprised between 1 and 50, preferably between 1 and 25,
b is comprised between 1 and 35, preferably between 1 and 25, and
k is comprised between 1 and 7, preferably between 1 and 5, and
x, y, z, a, b, and k are such that x + y + z + a + b + k = 100.

3. The vitroceramics according to claim 1 or lens according to claim 2, **characterised in that** x and y are such that x + y ≥ 40, preferably x + y ≥ 50.

4. The vitroceramics according to claim 1 or 3 or lens according to claim 2 or 3, **characterised in that** x is equal to 0.

5. The vitroceramics or lens according to claim 4, **characterised in that** y is comprised between 40 and 60, preferably between 43 and 55.

6. The vitroceramics according to any one of claims 1 or 3 or lens according to claim 2, **characterised in that** y is equal to 0.

7. The vitroceramics or lens according to claim 6, **characterised in that** x is comprised between 50 and 98, preferably between 60 and 98.

8. The vitroceramics or lens according to claim 6 or 7, **characterised in that** z is equal to 0.

9. The vitroceramics according to claim 1 or 3 or lens according to any one of claims 2 or 3, **characterised in that** x and y are both different from 0.

10. The vitroceramics or lens according to claim 9, **characterised in that** x and y are each independently comprised between:
- 10 and 80, preferably between 30 and 70 for x; and
- 10 and 60, preferably between 30 and 60 for y.

11. The vitroceramics or lens according to claim 9 or 10, **characterised in that** x and y are such that x + y is comprised between 50 and 95, even more preferably between 60 and 98, even more preferably between 80 and 95.

12. The vitroceramics according to any one of claims 1 and 3 to 11 or lens according to any one of claims 2 to 11, comprising dopants in addition to the composition of formula (I) to reach 100% by mass.

13. A method for manufacturing a nanostructured lens according to any one of claims 2 to 12, comprising the successive steps of:
1 - melting the starting oxides, or where appropriate their precursors, present in powder form, at a temperature comprised between 900°C and 1700°C;
2 - cooling,
resulting in a transparent or translucent nanostructured lens having a substantially zero content of Li₂O, Al₂O₃ and BaO, and comprising at least 97%, such as from 97% to 100%, preferably from 99% to 100%, by mass, relative to the total mass of the lens, of a composition of formula I below:
(GeO₂)ₓ(SiO₂)_{y}(B₂O₃)_{z}(Ga₂O₃)ₐ (Oxy₁)_{b}(Oxy₂)ₖ (I)
where
Oxy₁ represents an oxide selected from ZnO, MgO, NbO_{2.5}, WO₃, NiO, SnO, TiO₂, BiO_{1.5}, AgO, CaO, MnO, or a mixture thereof, preferably selected from ZnO, MgO, AgO, BiO_{1.5}, NbO_{2.5} or a mixture thereof, and
Oxy₂ represents an oxide selected from Na₂O, K₂O or a mixture thereof, preferably Oxy₂ represents Na₂O, and
x is comprised between 0 and 98, and
y is comprised between 0 and 60, and
x and y are not simultaneously zero, and
z is comprised between 0 and 20, preferably between 0 and 10,
x + y + z is comprised between 40 and 98,
a is comprised between 1 and 50, preferably between 1 and 25,
b is comprised between 1 and 35, preferably between 1 and 25, and
k is comprised between 1 and 7, preferably between 1 and 5, and
x, y, z, a, b, and k are such that x + y + z + a + b + k = 100.

14. The method for manufacturing a nanostructured vitroceramics according to any one of claims 1 and 3 to 12, comprising the successive steps of:
1 - manufacturing a transparent or translucent nanostructured lens having a substantially zero content of Li₂O and comprising at least 97%, such as from 97% to 100%, preferably from 99% to 100%, by mass, relative to the total mass of the material, of a composition of formula I below:
(GeO₂)ₓ(SiO₂)_{y}(B₂O₃)_{z}(Ga₂O₃)ₐ (Oxy₁)_{b}(Oxy₂)ₖ (I)
where
Oxy₁ represents an oxide selected from ZnO, MgO, NbO_{2.5}, WO₃, NiO, SnO, TiO₂, BiO_{1.5}, AgO, CaO, MnO, or a mixture thereof, preferably selected from ZnO, MgO, AgO, BiO_{1.5}, NbO_{2.5}, or a mixture thereof, and
Oxy₂ represents an oxide selected from Na₂O, K₂O or a mixture thereof, preferably Oxy₂ represents Na₂O, and
x is comprised between 0 and 98, and
y is comprised between 0 and 60, and
x and y are not simultaneously zero, and
z is comprised between 0 and 20, preferably between 0 and 10,
x, y, z are such that x + y + z is comprised between 40 and 98,
a is comprised between 1 and 50, preferably between 1 and 25,
b is comprised between 1 and 35, preferably between 1 and 25, and
k is comprised between 1 and 7, preferably between 1 and 5, and
x, y, z, a, b, and k are such that x + y + z + a + b + k = 100, according to a method comprising the successive steps of:
melting of the starting oxides, or where appropriate, their precursors, present in powder form, at a temperature comprised between 900°C and 1700°C; then cooling;
2 - crystallisation heat treatment of this lens at a temperature comprised between 400°C and 900°C, preferably between 600°C and 800°C, for a time comprised between 15 min and 48, more preferably between 15 min and 6h, even more preferably between 30 min and 2 h.

15. A use of a lens according to any one of claims 2 to 12 or a vitroceramics according to any one of claims 1 and 3 to 12 for the manufacture of optical materials, particularly of solid, powder, fibre or layer types.

16. The use according to claim 15 for the manufacture of materials for medical imaging, for lighting or for display.

17. The use of a lens according to any one of claims 2 to 12 for laser marking.
